# FASCICULE DE BREVET EUROPEEN

(11) **EP 2 842 009 B1**
(45) Date de publication et mention de la délivrance du brevet: **13.11.2019**
(21) Numéro de dépôt: 13725396.9
(22) Date de dépôt: 29.04.2013
(51) Int. Cl.: G05D 1/00, E04H 4/16

(54) **PROCÉDÉ ET DISPOSITIF DE MODIFICATION D'UN DISPOSITIF DE NETTOYAGE D'UNE SURFACE IMMERGÉE**
VERFAHREN UND VORRICHTUNG ZUR MODIFIZIERUNG EINER VORRICHTUNG ZUM REINIGEN EINER EINGETAUCHTEN FLÄCHE
METHOD AND DEVICE FOR MODIFYING A DEVICE FOR CLEANING A SUBMERGED SURFACE

(30) Priorité: 27.04.2012 FR 1201250
(43) Date de publication de la demande: 04.03.2015
(73) Titulaire: Zodiac Pool Care Europe, 69500 Bron (FR)
(72) Inventeur: MICHELON, Thierry, F-31200 Toulouse (FR)
(74) Mandataire: Ipside
(86) Numéro de dépôt international: PCT/FR2013/050950
(87) Numéro de publication internationale: WO 2013/160628

(56) Documents cités:
- EP-A1- 1 122 382
- US-A- 5 569 371
- US-A1- 2007 067 930
- US-B1- 7 062 221

## Description

L'invention concerne un procédé et un dispositif associé de modification d'une liaison de communication entre un appareil automobile nettoyeur de surface immergée dans un liquide et son boîtier de commande. L'invention concerne notamment un procédé et un dispositif rendant possible une commande sans fil de l'appareil. L'invention concerne aussi un dispositif de nettoyage incluant un appareil automobile nettoyeur de surface immergée, un boîtier de commande filaire de l'appareil et ledit dispositif de modification.

Les appareils automobiles nettoyeurs de surface immergée, notamment les appareils automobiles électriques, sont soit complètement autonomes soit, plus généralement, reliés à un boîtier de commande extérieur au bassin (notamment au bassin de piscine) qui les alimente via un câble en énergie électrique et qui les commande. Parfois de tels boîtiers de commande permettent à un utilisateur de télécommander l'appareil, notamment de le piloter sur la surface immergée, ce qui peut se révéler utile pour extraire l'appareil hors du liquide ou pour nettoyer une zone spécifique d'un bassin. Cependant cela requiert d'un utilisateur qu'il se trouve à proximité du bassin, à l'endroit exact où est installé le boîtier de commande.

Des moyens de télécommander un appareil nettoyeur de surface immergée (ou robot de piscine) ont par ailleurs déjà été proposés. Ainsi, on connaît par exemple US 5,569,371 qui propose une télécommande permettant de contrôler les déplacements de l'appareil. De même, on connaît EP 1 122 382 qui propose un appareil nettoyeur de piscine relié à une unité flottante de commande adaptée pour recevoir des signaux de commande sans fil et les transmettre par voie filaire à l'appareil nettoyeur de piscine. Enfin, on connaît de US 2007/067930 un dispositif de nettoyage de surface immergée, comprenant un appareil automobile nettoyeur, un boîtier de commande et de charge de batterie ainsi qu'un boîtier flotteur relié par liaison filaire audit appareil et comportant une unité de traitement des signaux et un récepteur sans fil pour recevoir des commandes d'une télécommande par une antenne et pouvant par ailleurs être raccordé au boîtier de charge de batterie par une liaison filaire, le boîtier flotteur étant alors interposé entre le chargeur et l'appareil nettoyeur en étant adapté pour transmettre audit appareil les signaux reçus depuis le boîtier de commande et de charge.

Cependant, dans chaque cas, pour pouvoir profiter d'une commande à distance, notamment sans fil, et plus particulièrement par l'intermédiaire d'une télécommande sans fil, l'utilisateur doit acheter un nouveau boîtier de commande compatible, c'est-à-dire adapté pour recevoir et émettre des signaux sans fil. Cela représente un coût important pour l'utilisateur qui est alors amené à remplacer un boîtier de commande encore en état de fonctionnement.

L'invention vise donc à pallier ces inconvénients.

L'invention vise à proposer un procédé et un dispositif de modification d'un dispositif de nettoyage de surface immergée, notamment d'une liaison de communication entre un boîtier de commande et un appareil automobile nettoyeur de surface immergée.

L'invention vise en particulier à proposer un procédé et un dispositif de modification permettant de commander sans fil un appareil qui n'a, à l'origine, pas été conçu pour pouvoir l'être.

L'invention vise également à proposer un tel dispositif qui soit simple à installer sur une liaison filaire existante entre un boîtier de commande et un appareil.

L'invention vise notamment à proposer un tel dispositif qui s'installe seul et ne nécessite aucune intervention informatique - notamment d'installation, configuration ou programmation logicielle - de la part de l'utilisateur.

L'invention vise en outre à proposer un tel dispositif qui est compatible avec tous types de télécommande, notamment avec des appareils électroniques de grande consommation telle que des téléphones mobiles, des ordinateurs portables, des tablettes tactiles, etc.

L'invention concerne donc un procédé de modification de dispositif de nettoyage de surface immergée dans lequel on choisit un dispositif de nettoyage comprenant :
- un appareil nettoyeur de surface immergée comprenant au moins une unité électronique,
- un boîtier de commande :
   - relié directement ou indirectement par une liaison avec l'unité électronique de l'appareil,
   - adapté pour pouvoir élaborer et envoyer des signaux de commande à destination de l'unité électronique de l'appareil via ladite liaison,
caractérisé en ce qu'on choisit et on interpose, sur la liaison entre le boîtier de commande et l'appareil, un dispositif, dit dispositif de modification, comprenant :
- une antenne adaptée pour pouvoir au moins recevoir des signaux, dits signaux de requête, sans fil,
- une unité de traitement de signaux reliée électriquement à l'antenne, et adaptée pour pouvoir :
   - transmettre des signaux de commande reçus depuis le boîtier de commande à l'appareil via ladite liaison,
   - sur réception de signaux de requête sans fil par l'antenne :
      ❖ ne pas transmettre au moins une partie des signaux de commande (18) reçus depuis le boîtier de commande ,
      ❖ élaborer des signaux, dits signaux prioritaires, de commande de l'appareil,
      ❖ transmettre lesdits signaux prioritaires à l'appareil via ladite liaison.

Avantageusement, dans un procédé selon l'invention,
- l'unité électronique est embarquée à bord de l'appareil, et
- le boîtier de commande est relié uniquement par une liaison filaire avec l'unité électronique de l'appareil.

L'invention concerne donc un procédé de modification de dispositif de nettoyage de surface immergée dans lequel on choisit un dispositif de nettoyage comprenant :
- un appareil nettoyeur de surface immergée comprenant au moins une unité électronique embarquée,
- un boîtier de commande :
   - relié uniquement par une liaison filaire avec l'unité électronique embarquée de l'appareil,
   - adapté pour pouvoir élaborer et envoyer des signaux de commande à destination de l'unité électronique embarquée de l'appareil via ladite liaison filaire,
caractérisé en ce qu'on choisit et on interpose, sur la liaison filaire entre le boîtier de commande et l'appareil, un dispositif, dit dispositif de modification, comprenant :
- une antenne adaptée pour pouvoir au moins recevoir des signaux, dits signaux de requête, sans fil,
- une unité de traitement de signaux reliée électriquement à l'antenne, et adaptée pour pouvoir :
   - transmettre des signaux de commande reçus depuis le boîtier de commande à l'appareil via ladite liaison filaire,
   - sur réception de signaux de requête sans fil par l'antenne :
      ❖ ne pas transmettre au moins une partie des signaux de commande reçus depuis le boîtier de commande,
      ❖ élaborer des signaux, dits signaux prioritaires, de commande de l'appareil,
      ❖ transmettre lesdits signaux prioritaires à l'appareil via ladite liaison filaire.

Dans un tel procédé l'intervention humaine est très limitée : il suffit d'interposer un dispositif de modification selon l'invention sur une liaison filaire entre un appareil nettoyeur de surface immergée et son boîtier de commande, ledit boîtier de commande étant exempt de liaison de communication sans fil, pour pouvoir envoyer des commandes sans fil à destination de l'appareil.

C'est pourquoi, avantageusement et selon l'invention, on choisit un dispositif de modification comprenant :
- un premier connecteur, dit connecteur amont, électrique adapté pour pouvoir être connecté électriquement avec un boîtier de commande,
- un deuxième connecteur, dit connecteur aval, électrique adapté pour pouvoir être connecté électriquement avec un appareil automobile nettoyeur de surface immergée.

L'invention concerne donc aussi un dispositif de modification d'un dispositif de nettoyage de surface immergée comprenant un appareil automobile nettoyeur de surface immergée et au moins un boîtier de commande dudit appareil relié directement ou indirectement audit appareil par une liaison, ledit dispositif de modification étant adapté pour pouvoir être interposé sur ladite liaison et comprenant :
- une antenne adaptée pour pouvoir au moins recevoir des signaux, dits signaux de requête, sans fil,
- une unité de traitement de signaux reliée électriquement à l'antenne, et adaptée pour pouvoir :
   - transmettre des signaux de commande reçus depuis le boîtier de commande à l'appareil via ladite liaison,
   - sur réception de signaux de requête sans fil par l'antenne :
      ❖ ne pas transmettre au moins une partie des signaux de commande reçus depuis le boîtier de commande,
      ❖ élaborer des signaux, dits signaux prioritaires, de commande de l'appareil,
      ❖ transmettre lesdits signaux prioritaires à l'appareil via ladite liaison.

Avantageusement et selon l'invention, le boîtier de commande dudit appareil est relié audit appareil uniquement par une liaison filaire.

L'invention concerne donc un dispositif de modification d'un dispositif de nettoyage de surface immergée comprenant un appareil automobile nettoyeur de surface immergée et au moins un boîtier de commande dudit appareil relié audit appareil uniquement par une liaison filaire, ledit dispositif de modification étant adapté pour pouvoir être interposé sur ladite liaison filaire et comprenant :
- une antenne adaptée pour pouvoir au moins recevoir des signaux, dits signaux de requête, sans fil,
- une unité de traitement de signaux reliée électriquement à l'antenne, et adaptée pour pouvoir :
   - transmettre des signaux de commande reçus depuis le boîtier de commande à l'appareil via ladite liaison filaire,
   - sur réception de signaux de requête sans fil par l'antenne :
      ❖ ne pas transmettre au moins une partie des signaux de commande reçus depuis le boîtier de commande,
      ❖ élaborer des signaux, dits signaux prioritaires, de commande de l'appareil,
      ❖ transmettre lesdits signaux prioritaires à l'appareil via ladite liaison filaire.

L'invention permet ainsi de rendre communiquant par une liaison sans fil, un dispositif de nettoyage de surface immergée qui n'était pas spécifiquement conçu pour pouvoir l'être lors de sa fabrication.

Ainsi le dispositif de modification selon l'invention permet d'utiliser une télécommande sans fil ou une centrale automatique distante pour envoyer des commandes sans fil et notamment pour piloter l'appareil.

Un dispositif de modification selon l'invention est en particulier prévu pour pouvoir être interposé sur une liaison de communication filaire entre un appareil et un boîtier de commande dudit appareil, notamment pour des appareils et des boîtiers de commande d'ancienne génération ne présentant pas de moyens de communication sans fil.

A partir des signaux de requête reçus sans fil, l'unité de traitement de signaux du dispositif de modification selon l'invention élabore des signaux de commande, dits signaux prioritaires, car ils sont envoyés de façon prioritaires à l'unité électronique embarquée de l'appareil par rapport aux signaux de commande transmis - éventuellement simultanément - par le boîtier de commande à destination de l'appareil et bloqués par l'unité de traitement de signaux du dispositif de modification selon l'invention.

Plus particulièrement, l'unité de traitement de signaux est avantageusement adaptée pour, sur réception de signaux de requête sans fil par l'antenne, ne transmettre aucun desdits signaux de commande reçus depuis le boîtier de commande.

En particulier, avantageusement et selon l'invention, en outre :
- un premier connecteur, dit connecteur amont, électrique adapté pour pouvoir être connecté électriquement avec un boîtier de commande,
- un deuxième connecteur, dit connecteur aval, électrique adapté pour pouvoir être connecté électriquement avec un appareil automobile nettoyeur de surface immergée.

En effet, les appareils automobiles présentent généralement un câble d'alimentation et de commande terminée par un connecteur adapté pour pouvoir être branché sur un connecteur coopérant d'un boîtier de commande de l'appareil.

Grâce à ses connecteurs amont et aval, le dispositif selon l'invention peut être interposé entre le connecteur, dit connecteur récepteur, de l'appareil et le connecteur, dit connecteur émetteur, du boîtier de commande.

Un dispositif selon l'invention permet donc à l'utilisateur propriétaire d'un ancien boîtier de commande d'éviter l'achat d'un nouveau boîtier de commande incluant une fonction de réception d'émissions de signaux sans fil.

De plus, un dispositif selon l'invention comprend avantageusement au moins une interface d'entrée/sortie disposée entre l'unité de traitement de signaux et les connecteurs amont et aval.

L'interface d'entrée/sortie assure une interface entre les signaux reçus depuis et émis vers le boîtier de commande par l'unité de traitement de signaux du dispositif selon l'invention, ainsi qu'entre les signaux reçus depuis et émis vers l'appareil par l'unité de traitement de signaux du dispositif selon l'invention. C'est pourquoi, avantageusement, le dispositif de modification selon l'invention peut aussi comprendre une première interface d'entrée/sortie interposée sur une liaison filaire entre un boîtier de commande et l'unité de traitement de signaux du dispositif selon l'invention, et une seconde interface d'entrée/sortie interposée sur une liaison filaire entre un appareil et l'unité de traitement de signaux du dispositif selon l'invention.

De plus, un dispositif selon l'invention comprend avantageusement en outre au moins une mémoire contenant des données, dites données de reprogrammation, logiques représentatives d'instructions de reprogrammation d'un boîtier de commande.

De plus, avantageusement et selon l'invention, l'unité de traitement de signaux est adaptée pour, sur connexion d'un boîtier de commande au connecteur amont, transmettre lesdites données de reprogrammation audit boîtier de commande via le connecteur amont.

En particulier, avantageusement et selon l'invention, l'unité de traitement de signaux est adaptée pour, dès qu'elle est connectée pour la première fois à un boîtier de commande compatible, envoyer au boîtier de commande des signaux prédéterminés, à réception desquels le boîtier de commande engage une procédure de réinitialisation. L'unité de traitement de signaux est adaptée pour, ensuite, envoyer des signaux de programmation du boîtier de commande.

La simple connexion électrique d'un dispositif selon l'invention permet donc la reprogrammation automatique - c'est-à-dire sans intervention d'un utilisateur humain - du boîtier de commande pour le rendre compatible avec le dispositif selon l'invention.

Ainsi l'installation d'un dispositif selon l'invention ne requiert aucune connaissance en informatique, notamment aucune intervention informatique (programmation, installation, configuration,...), de la part de l'utilisateur.

La (les) mémoire(s) d'un dispositif selon l'invention comprend (comprennent) donc un espace de stockage suffisant pour stocker des données logiques représentatives d'instructions de fonctionnement du dispositif selon l'invention, et des données de reprogrammation du boîtier de commande.

Au moins une mémoire est avantageusement une mémoire inscriptible non volatile (ou mémoire morte), c'est-à-dire une mémoire persistante même si l'alimentation dudit dispositif est coupée, par exemple de type EEPROM.

A partir d'un programme enregistré dans une mémoire non-volatile (par exemple de type FLASH), l'unité de traitement de signaux traite les signaux reçus sur le connecteur amont ou sur le connecteur aval et émet des signaux électroniques à destination du boîtier de commande ou de l'appareil respectivement via le connecteur amont ou via le connecteur aval.

Avantageusement et selon l'invention, le dispositif de modification selon l'invention comprend un microcontrôleur. Ce microcontrôleur assure les fonctions d'unité de traitement de signaux et de mémoire - au moins deux mémoires de stockage des instructions de l'unité de traitement de signaux.

Avantageusement, un dispositif selon l'invention est aussi caractérisé en ce qu'il comprend en outre, entre le connecteur amont et le connecteur aval, au moins un fil d'alimentation électrique, et en ce que le connecteur amont et le connecteur aval présentent chacun une fiche électrique reliée électriquement audit fil d'alimentation électrique.

Ainsi, lorsque le boîtier de commande est relié par un câble à l'appareil, ledit câble comprend généralement deux fils d'alimentation électrique et un fil de communication de données. Rien n'empêche cependant que les fils d'alimentation électrique, lorsque l'alimentation est en courant alternatif, soit utilisés comme fils de communication de données par courant porteur.

Le dispositif selon l'invention permet ainsi la transmission de l'alimentation électrique fournie par le boîtier de commande à l'appareil.

Un dispositif selon l'invention peut par exemple se présenter sous la forme d'un tronçon de câble terminé par un connecteur aval à une première extrémité et un connecteur amont à sa seconde extrémité. Le dispositif selon l'invention se présente sous la forme d'un tronçon de câble en outre équipé d'une petite coque comprenant l'unité de traitement de signaux, l'antenne, au moins une mémoire, et la(les) interface(s) d'entrée/sortie. Il est donc avantageusement plus léger et moins coûteux qu'un boîtier de commande complet.

De plus, la coque contenant l'unité de traitement de signaux, l'antenne, au moins une mémoire, et l'interface d'entrée/sortie est avantageusement et selon l'invention une coque étanche à l'eau. La coque protège ainsi les équipements électroniques du dispositif de modification selon l'invention des projections d'eau ou de la pluie, fréquentes à proximité d'un bassin, notamment d'un bassin de piscine extérieure.

Par ailleurs, avantageusement et selon l'invention,
- l'antenne est adaptée pour pouvoir émettre des signaux sans fil,
- l'unité de traitement de signaux est adaptée pour pouvoir :
   - recevoir, depuis l'appareil, des signaux contenant des données, dites données d'état, relatives audit appareil ou à son environnement,
   - élaborer des signaux, dits signaux d'état, à partir desdites données d'état,
   - émettre sans fil des signaux d'état via l'antenne.

Ainsi un utilisateur d'un appareil sur lequel est monté un dispositif selon l'invention peut récupérer des données, dites données d'état, concernant l'appareil ou son environnement sur une télécommande sans fil. Par exemple, des données d'état peuvent être représentatives d'informations relatives à l'appareil ou à son environnement tel que : la température ou le pH de l'eau dans laquelle l'appareil évolue, un itinéraire parcouru sur la(les) surface(s) immergée(s), un message d'erreur ou un historique d'erreurs rencontrées par l'appareil, l'état de ses batteries lorsque l'appareil est autonome, etc.

En particulier, avantageusement et selon l'invention, l'unité de traitement de signaux est adaptée pour pouvoir analyser et reconnaître des signaux de requête prédéterminés reçus via l'antenne et représentatifs d'une demande d'information relative à l'appareil et/ou à son environnement, et pour pouvoir élaborer et émettre des signaux prioritaires de commande représentatifs d'une demande de données d'état à destination de l'appareil. L'unité de traitement de signaux est adaptée pour pouvoir ensuite recevoir, via la liaison filaire, des données d'état envoyées par l'unité électronique embarquée de l'appareil, pour pouvoir les analyser et élaborer puis émettre sans fil, via l'antenne, des signaux d'état contenant l'information représentée par lesdites données d'état reçues.

L'information contenue dans les signaux d'état peut être avantageusement affichée sur une télécommande (notamment lorsque la télécommande est un appareil numérique doté d'un écran), ou sur une station programmable distante.

Un dispositif selon l'invention est adapté pour pouvoir recevoir des signaux de requête sans fil par exemple d'une télécommande ou d'une station programmable distante. Une station programmable fixe est en effet parfois installée dans un logement à proximité d'un bassin extérieur, afin de permettre à l'utilisateur de commander son appareil depuis son logement sans sortir par exemple pour se rendre dans un local technique.

Avantageusement, un dispositif selon l'invention comprend en outre une télécommande, adaptée pour pouvoir envoyer des signaux de requête sans fil.

Une telle télécommande peut par exemple être fournie avec le dispositif de modification selon l'invention et être dédiée à cette utilisation.

Alternativement tout dispositif programmable et pouvant émettre des signaux sans fil dans la gamme de fréquences dans laquelle l'antenne du dispositif selon l'invention est adaptée pour pouvoir fonctionner, peut être utilisé à titre de télécommande.

Avantageusement une télécommande selon l'invention comprend un écran adapté pour pouvoir afficher des informations relatives à l'appareil et/ou à son environnement reçues par des signaux d'état.

De plus, la télécommande comprend avantageusement des boutons - physiques ou simulés sur un écran tactile - déclenchant l'envoi de signaux de requête par la télécommande.

En particulier, des appareils mobiles tels que des téléphones mobiles, des ordinateurs portables, des tablettes numériques, etc. peuvent être programmés avec un programme informatique leur permettant d'élaborer des signaux de requête conformément à l'invention et ainsi de pouvoir fonctionner comme télécommande d'un appareil via le dispositif selon l'invention.

C'est pourquoi, avantageusement l'invention s'étend aussi à un programme informatique comprenant des instructions de code informatique pour permettre à un terminal informatique tel qu'un téléphone mobile ou un ordinateur d'être utilisé en tant que télécommande du dispositif selon l'invention lorsque ledit programme informatique est chargé et exécuté sur ledit terminal.

C'est pourquoi, avantageusement et selon l'invention, l'unité de traitement de signaux et l'antenne sont adaptées pour émettre et recevoir des signaux sans fil dans un domaine de radiofréquence et selon un protocole conforme à une norme Wi-Fi.

Les normes Wi-Fi étant très largement acceptées et utilisées par de nombreux appareils domestiques et grand public, le dispositif de modification selon l'invention est ainsi compatible avec un grand nombre d'appareils disponibles à un utilisateur - en particulier des appareils programmables par un programme informatique (ou logiciel) selon l'invention.

L'antenne est donc avantageusement adaptée pour émettre et recevoir dans une bande de fréquences comprises entre 2,4 GHz et 2,5 GHz. L'unité de traitement de signaux est avantageusement adaptée pour pouvoir traiter et élaborer des signaux selon un protocole du type Wi-Fi.

De même, l'unité de traitement de signaux et l'antenne peuvent être avantageusement adaptées pour pouvoir émettre et recevoir des signaux sans fil dans un autre domaine de radiofréquence et selon un autre protocole conforme à une norme, par exemple du type Bluetooth®, Zigbee®, etc.

L'invention s'étend également à un dispositif de nettoyage d'une surface immergée comprenant au moins :
- un appareil nettoyeur de surface immergée comprenant au moins une unité électronique embarquée,
- un boîtier de commande :
   - adapté pour pouvoir être relié uniquement par une liaison filaire avec l'unité électronique embarquée de l'appareil,
   - adapté pour pouvoir élaborer et envoyer des signaux de commande à destination de l'unité électronique embarquée de l'appareil via ladite liaison filaire,
   - un dispositif de modification selon l'invention.

En particulier, l'appareil automobile nettoyeur de surface immergée comprend en outre au moins une interface de communication embarquée, reliée électriquement à l'unité électronique embarquée, et un connecteur, dit connecteur récepteur, électrique relié électriquement à l'interface de communication est adapté pour pouvoir être connecté à un connecteur, dit connecteur émetteur, d'un boîtier de commande.

Un tel dispositif de nettoyage permet de fournir l'ensemble de l'appareil et de son système de commande (boîtier de commande et dispositif de modification d'une liaison de communication selon l'invention entre le boîtier de commande et l'appareil). Ce qui permet en particulier, sans modifier la chaîne de fabrication du boîtier de commande de permettre à l'appareil d'être commandé sans fil par une télécommande ou une station programmable distante.

Avantageusement, un dispositif de nettoyage selon l'invention comprend en outre une télécommande, adaptée pour pouvoir envoyer des signaux de requête sans fil, à destination de l'antenne du dispositif de modification.

Un dispositif de nettoyage selon l'invention peut aussi comprendre des moyens de stockage de données numériques représentatives d'un programme informatique destiné à être installé sur un appareil informatique pour pouvoir le faire fonctionner comme une télécommande ou une station programmable distante.

L'invention concerne aussi un procédé de commande sans fil d'un appareil nettoyeur de piscine utilisant un dispositif de modification, comprenant :
a) la transmission sans fil de signaux de requête au dispositif de modification, les signaux de requête étant relatifs à la commande de l'appareil nettoyeur de piscine, et
b) la transmission sans fil de signaux d'état par le dispositif de modification, les signaux d'état étant relatifs à l'appareil nettoyeur de piscine ou à son environnement dans une piscine.

Un tel procédé comprend en outre avantageusement la transmission de signaux de commande depuis un boîtier de commande au dispositif de modification.

Avantageusement, un tel procédé comprend en outre le traitement des signaux de requête reçus sans fil par le dispositif de modification et l'élaboration de signaux prioritaires pour transmission à l'appareil nettoyeur de piscine.

Avantageusement, un tel procédé selon l'invention comprend en outre la non-transmission des signaux de commande à l'appareil nettoyeur de piscine lorsque des signaux prioritaires sont transmis à l'appareil nettoyeur de piscine.

Avantageusement, un tel procédé selon l'invention comprend en outre la transmission de signaux d'état depuis l'appareil nettoyeur de piscine au dispositif de modification.

Avantageusement, un tel procédé selon l'invention comprend en outre l'utilisation d'une télécommande pour transmettre les signaux de requête au dispositif de modification

Avantageusement, un tel procédé selon l'invention comprend en outre l'utilisation d'une télécommande pour transmettre les signaux de requête au dispositif de modification selon un protocole conforme à une norme du type WiFi, Bluetooth®, ou Zigbee®.

L'invention concerne également un procédé de modification d'un dispositif de nettoyage de surface immergée, notamment d'une liaison de communication dudit dispositif de nettoyage, caractérisé en combinaison par tout ou partie des caractéristiques mentionnées ci-dessus ou ci-après.

L'invention concerne également un dispositif de modification d'un dispositif de nettoyage de surface immergée, notamment d'une liaison de communication dudit dispositif de nettoyage, caractérisé en combinaison par tout ou partie des caractéristiques mentionnées ci-dessus ou ci-après.

L'invention concerne également un dispositif de nettoyage de surface immergée caractérisé en combinaison par tout ou partie des caractéristiques mentionnées ci-dessus ou ci-après.

L'invention concerne également un procédé de commande sans fil d'un appareil nettoyeur de piscine caractérisé en combinaison par tout ou partie des caractéristiques mentionnées ci-dessus ou ci-après.

D'autres buts, caractéristiques et avantages de l'invention apparaîtront à la lecture de la description suivante donnée à titre non limitatif et qui se réfère aux figures annexées dans lesquelles :
- la figure 1 est une représentation schématique conforme à l'invention d'un dispositif de nettoyage de surface immergée selon l'invention sur lequel un dispositif de modification selon l'invention a été interposé entre un boîtier de commande et un appareil nettoyeur de surface immergée selon un procédé conforme à l'invention,
- la figure 2 est un schéma synoptique fonctionnel du dispositif de nettoyage de surface immergée selon l'invention, comprenant un dispositif de modification selon l'invention, conformément à la figure 1.

Un dispositif de modification 1 d'une liaison de communication selon l'invention est avantageusement adapté pour pouvoir être ajouté sur une liaison de communication existante entre un appareil 3 nettoyeur de surface immergée 23 et un boîtier de commande 2 dudit appareil.

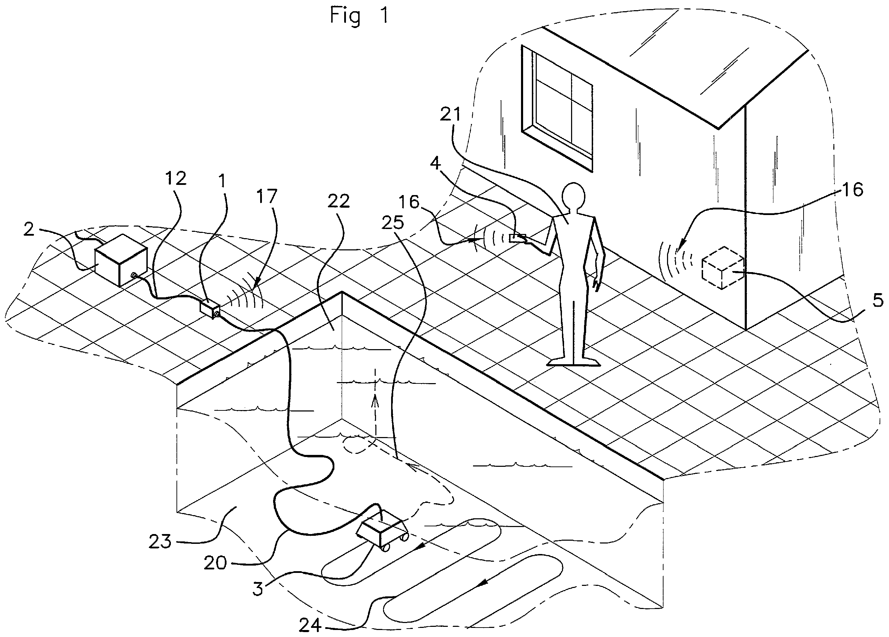

Comme représenté à la figure 1, l'appareil 3 nettoyeur de surface immergée parcourt une surface immergée 23 d'un bassin 22 de piscine. L'appareil 3 est relié à un boîtier de commande 2 par une liaison filaire sous la forme d'un câble 20 permettant de transmettre des signaux de commandes 18 et une alimentation électrique audit appareil 3 - grâce notamment à une liaison électrique de puissance par deux fils 19. C'est sur ce câble 20 qu'un dispositif de modification 1 selon l'invention peut être interposé.

En effet, le boîtier de commande 2 comprend un connecteur, dit connecteur émetteur 14, adapté pour pouvoir coopérer de façon à créer une liaison électrique avec un connecteur, dit connecteur récepteur 13, relié électriquement à l'appareil 3.

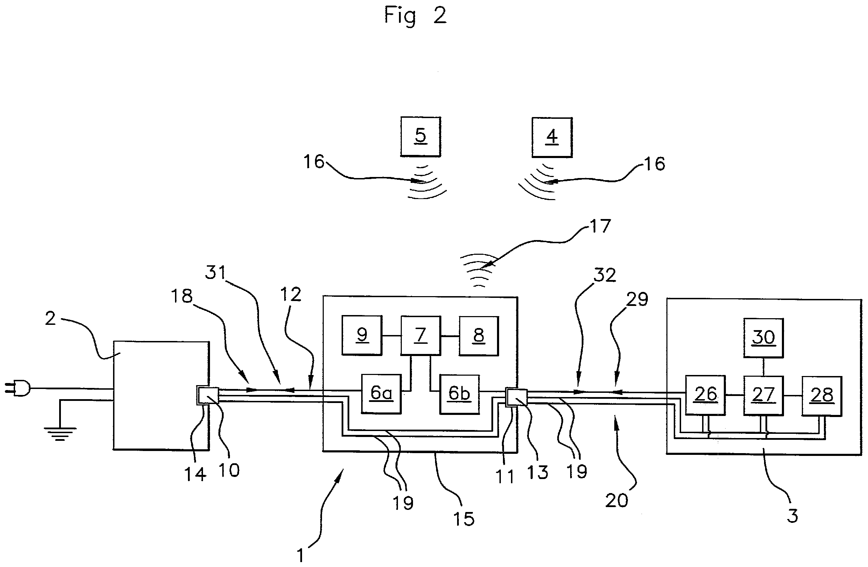

Un dispositif de modification 1 selon l'invention comprend donc un connecteur, dit connecteur amont 10, du même type - notamment de même forme - que le connecteur récepteur 13, adapté pour pouvoir coopérer avec ledit connecteur émetteur 14, et un connecteur, dit connecteur aval 11, du même type - notamment de même forme - que le connecteur émetteur 14 adapté pour pouvoir coopérer avec le dit connecteur récepteur 13, pour pouvoir être interposé sur la liaison de communication entre le boîtier de commande 2 et l'appareil 3. Ainsi, comme représenté aux figures 2 et 3, le connecteur émetteur 14 du boîtier de commande 2 est un connecteur femelle, le connecteur amont 10 est un connecteur mâle, le connecteur aval 11 est un connecteur femelle, et le connecteur récepteur 13 est un connecteur mâle.

Dans une première étape d'un procédé conforme à l'invention, le connecteur récepteur 13 est déconnecté du connecteur émetteur 14. Dans une deuxième étape d'un procédé conforme à l'invention, le connecteur amont 10 du dispositif de modification 1 est connecté au connecteur émetteur 14 du boîtier de commande 2. Dans une troisième étape d'un procédé conforme à l'invention, subséquente, précédente ou simultanée à la deuxième étape, le connecteur aval 11 du dispositif de modification 1 est connecté au connecteur récepteur 13 de l'appareil. Dans une quatrième étape, l'utilisateur est inactif, et le dispositif de modification 1 reprogramme automatiquement le boîtier de commande 2. Dans une cinquième étape, facultative et pouvant intervenir à tout moment avant, pendant ou après les autres étapes du procédé, un programme informatique est installé par l'utilisateur sur un dispositif informatique, notamment un dispositif mobile, de l'utilisateur afin de permettre audit dispositif informatique de fonctionner comme une télécommande 14.

Un dispositif de modification 1 selon l'invention peut présenter un tronçon de câble 12 entre le connecteur amont 10 et le connecteur aval 11, sur lequel une coque 15 étanche est interposée.

La portion de câble 12 est facultative, les connecteurs amont 10 et aval 11 pourraient être directement intégrés à la coque 15 étanche. Cependant, un appareil 3 présente généralement un câble de longueur importante terminée par un connecteur récepteur 13 adapté pour pouvoir être connecté à un connecteur émetteur 14 d'un boîtier de commande 2, ledit connecteur émetteur étant intégré à la propre coque du boîtier de commande 2. C'est pourquoi le dispositif de modification 1 tel que représenté aux figures 1 à 3 présente un tronçon de câble 12 entre un connecteur amont 10 et la coque 15 et présente un connecteur aval 11 débouchant directement de la coque 15.

Ladite coque 15 étanche contient deux interfaces de communication entrée/sortie 6a, 6b respectivement avec le boîtier de commande 2 via le connecteur amont 10 et avec l'appareil 3 via le connecteur aval 11 - notamment avec une interface de communication embarquée 26 à bord de l'appareil 3. L'interface de communication embarquée 26 à bord de l'appareil 3 est avantageusement reliée à une unité électronique embarquée 27 adaptée pour pouvoir interpréter des signaux de commande 18 et des signaux prioritaires de commande 32 et les transformer en commandes d'un dispositif d'entraînement et de guidage 28 de l'appareil 3 sur une surface immergée 23.

Comme représentée aux figures 2 et 3, la coque 15 comprend en outre une unité de traitement de signaux 7, une mémoire 9 non-volatile et une antenne 8. Ladite unité de traitement de signaux 7 est reliée aux interfaces de communication entrée/sortie 6a, 6b, à la mémoire 9 non-volatile et à l'antenne 8. L'unité de traitement de signaux 7 et la mémoire 9 sont avantageusement comprises dans un microcontrôleur.

L'antenne 8 est adaptée pour pouvoir émettre et recevoir des signaux électromagnétiques dans une bande de fréquences comprises entre un et trois GHz, notamment entre 2,4 et 2,5 GHz, conformément à un protocole Wi-Fi.

La mémoire 9 est adaptée pour pouvoir stocker des données, dites données de reprogrammation, logiques représentatives d'instructions de reprogrammation du boîtier de commande 2, ainsi que des données logiques représentatives d'instructions pour le fonctionnement du dispositif de modification 1 selon l'invention, notamment pour l'unité de traitement de signaux 7.

En particulier au moins une partie desdites données logiques enregistrées dans la mémoire 9 permet à l'unité de traitement de signaux 7 :
- d'élaborer des signaux, dits signaux d'état 17, à partir de données d'état 29 reçues de l'appareil 3 via le connecteur aval 11 et l'interface de communication entrée/sortie 6b, puis de les émettre sans fil via l'antenne 8 selon un protocole conforme à la norme Wi-Fi,
- d'interpréter des signaux, dits signaux de requête 16, reçus sans fil via l'antenne 8 selon un protocole conforme à la norme Wi-Fi, puis élaborer des signaux prioritaires de commande 32 et de les transmettre via l'interface de communication entrée/sortie 6b et le connecteur aval 11 à destination de l'appareil 3,

- d'interrompre la liaison de communication de signaux de commande 18 entre le boîtier de commande 2 et l'appareil 3 sur réception de signaux de requête 16 en ignorant tout signal de commande reçu du boîtier de commande 2,
- lors de la connexion du dispositif de modification 1 à un boîtier de commande 2 via le connecteur amont 10, d'envoyer des données de reprogrammation 31 audit boîtier de commande 2.

En particulier, l'unité de traitement de signaux 7 ignore et ne transmet aucun signal de commande 18 reçu du boîtier de commande 2 (via son connecteur amont 10) dès qu'elle reconnaît la trame d'un signal de requête 16, et pendant une durée prédéterminée à partir de la fin de réception d'un signal de requête 16.

Des signaux de requête 16 peuvent être émis par tous types de dispositifs, par exemple une télécommande 4 manipulée par un utilisateur 21, ou une station programmable distante 5.

Un utilisateur 21 peut donc prendre la main de façon prioritaire par rapport au boîtier de commande 2 sur la commande de l'appareil 3, notamment sur la commande de l'entraînement et du guidage de l'appareil sur la surface immergée 23. Ainsi, comme représenté à la figure 1, l'appareil 3 suivait une trajectoire 24 déterminée par un programme de nettoyage déterminé enregistré dans une mémoire du boîtier de commande 2 jusqu'à ce que le dispositif de modification 1 selon l'invention reçoive un message de requête 16 émis par une télécommande 4 manipulée par un utilisateur 21. Dès lors l'utilisateur 21 contrôle l'appareil 3 et peut par exemple le guider selon une trajectoire libre 25.

Les signaux de requête 16 sont donc avantageusement des signaux de pilotage de l'appareil 3, c'est-à-dire des signaux de guidage et de vitesse de déplacement (avant, arrière, vitesse, ...). Les signaux de requête 16 peuvent aussi être des signaux représentatifs d'une requête d'obtention de données ou d'informations relatives à l'appareil et/ou à son environnement. Ainsi l'appareil 3 peut être équipé d'un thermomètre 30 relié à l'unité électronique embarquée 27 qui, sur requête de l'unité de traitement de signaux 7 du dispositif de modification 1 via un signal de commande 18, prépare et envoie des données d'état 29 représentatives d'une température mesurée par le thermomètre 30 à destination de l'unité de traitement de signaux 7. À réception de telles données d'état 29, l'unité de traitement de signaux 7 élabore et émet sans fil via l'antenne 8 un message d'état 17 à destination par exemple d'une télécommande 4 adaptée pour afficher la température mesurée par le thermomètre 30 à un utilisateur 21.

La télécommande 4 est donc avantageusement un dispositif informatique mobile doté d'un écran. La télécommande 4 est par exemple un téléphone mobile sur lequel un programme informatique (ou logiciel, ou application logicielle) a été installé de façon à rendre le téléphone mobile compatible avec le dispositif de modification 1 selon l'invention. Ledit programme informatique permet notamment de rendre le téléphone mobile apte à élaborer des signaux de requête 16 sur pression de boutons physiques ou tactiles, et à interpréter des signaux d'état 17 pour afficher l'information qu'ils contiennent à un utilisateur 21.

Ledit programme informatique est en particulier adapté pour pouvoir exploiter des données d'un accéléromètre du téléphone mobile et les transformer en signaux de requête représentatifs de commandes de pilotage de l'appareil 3. Ledit programme informatique est aussi avantageusement adapté pour fournir à un utilisateur 21 une interface spécifique de contrôle de l'appareil 3 et d'affichage d'informations relatives à l'appareil 3 et à son environnement - notamment à l'eau dans laquelle il est immergé.

L'unité de traitement de signaux 7 est adaptée pour pouvoir, après connexion du connecteur amont 10 avec un boîtier de commande 2, détecter un signal de commande envoyé par le boîtier de commande à destination de l'appareil, notamment un signal de commande à l'allumage du boîtier de commande. Lors d'une détection, l'unité de traitement de signaux 7 détermine si les instructions de fonctionnement du boîtier de commande sont compatibles avec son propre fonctionnement et, si ce n'est pas le cas, envoie des données de reprogrammation 31 contenant une trame de réinitialisation du boîtier de commande 2, puis des données de reprogrammation 31 contenant de nouvelles instructions de fonctionnement du boîtier de commande 2 afin de le rendre compatible avec le dispositif de modification 1 selon l'invention.

Le dispositif de modification 1 selon l'invention permet donc de multiplier les moyens de contrôle d'un appareil 3, et plus particulièrement permet de contrôler l'appareil 3 grâce à des moyens de contrôle sans fil, donc à distance, par exemple depuis une habitation à proximité d'un bassin dans lequel l'appareil est immergé.

L'invention peut faire l'objet de nombreuses autres variantes de réalisation non représentées.

Ainsi, rien n'empêche de programmer le dispositif de modification 1 pour qu'il établisse un ordre de priorité entre une pluralité de signaux de requête 16 envoyés par différents dispositifs émetteurs de tels signaux, par exemple entre la station programmable distante 5 et la télécommande 4.

De plus les signaux de requête 16, les signaux de commande 18, les signaux prioritaires 32 et les signaux d'état 17 peuvent être de toute nature, en fonction par exemple des équipements à bord d'un appareil 3 nettoyeur de surface immergée. Aussi les signaux de requête 16, les signaux prioritaires 32 et les signaux de commande 18 sont avantageusement des signaux de guidage de l'appareil ou par exemple sont représentatifs d'un ordre de retour à la surface. Mais, si l'appareil 3 comprend par exemple un dispositif de traitement de l'eau, les signaux de requête 16, les signaux prioritaires 32 et les signaux de commande 18 peuvent être adaptés pour que l'unité électronique embarquée 27 donne des commandes spécifiques audit dispositif de traitement de l'eau. De même les signaux d'état 17 peuvent être représentatifs d'informations relatives à l'appareil 3, par exemple des erreurs ou une trajectoire suivie sur la surface immergée et enregistrée en mémoire pour qu'un utilisateur la visualise, ou peuvent être représentatifs d'informations relatives à son environnement, par exemple la température de l'eau ou le pH de l'eau, etc.

En outre, sur réception de signaux de requête 16, l'unité de traitement de signaux 7 peut être programmée pour faire transiter des signaux prioritaires de commande 32 par le boîtier de commande 2 avant qu'ils ne soient renvoyés vers l'appareil 3, l'unité de traitement de signaux 7 étant alors adaptée pour laisser passer des signaux de commande 18 de retour du boîtier de commande 2.

Rien n'empêche par ailleurs, que l'unité de traitement de données 7 du dispositif de modification selon l'invention n'ignore pas totalement les signaux de commande 18 du boîtier de commande et élabore des signaux prioritaires de commande 32 à destination de l'appareil à partir à la fois des signaux de requête reçus sans fil et à la fois des signaux de commande du boîtier de commande.

## Revendications

1. Dispositif de modification (1) d'un dispositif de nettoyage de surface immergée (23) comprenant un appareil (3) automobile nettoyeur de surface immergée et un boîtier de commande (2) dudit appareil relié directement ou indirectement audit appareil (3) par une liaison, ledit dispositif de modification (1) étant adapté pour pouvoir être interposé sur ladite liaison (20) et comprenant :
- une antenne (8) adaptée pour pouvoir au moins recevoir des signaux, dits signaux de requête (16), sans fil,
- une unité de traitement de signaux (7) reliée électriquement à l'antenne, et adaptée pour pouvoir :
• transmettre des signaux de commande (18) reçus depuis le boîtier de commande (2) à l'appareil (3) via ladite liaison,
• sur réception de signaux de requête (16) sans fil par l'antenne (8) :
❖ bloquer la transmission des signaux de commande (18) reçus depuis le boîtier de commande,
❖ élaborer des signaux, dits signaux prioritaires (32), de commande de l'appareil,
❖ transmettre lesdits signaux prioritaires (32) à l'appareil (3) via ladite liaison (20) à la place des signaux de commande.

2. Dispositif selon la revendication 1, **caractérisé en ce qu'**il comprend en outre :
- un premier connecteur, dit connecteur amont (10), électrique adapté pour pouvoir être connecté électriquement avec le boîtier de commande (2),
- un deuxième connecteur, dit connecteur aval (11), électrique adapté pour pouvoir être connecté électriquement avec l'appareil (3) automobile nettoyeur de surface immergée (23).

3. Dispositif selon la revendication 2, **caractérisé en ce qu'**il comprend en outre au moins une interface d'entrée/sortie (6a, 6b) disposée entre l'unité de traitement de signaux (7) et les connecteurs (10, 11) amont et aval.

4. Dispositif selon l'une des revendications 1 à 3, **caractérisé en ce qu'**il comprend en outre au moins une mémoire (9) contenant des données, dites données de reprogrammation (31), logiques représentatives d'instructions de reprogrammation du boîtier de commande (2).

5. Dispositif selon la revendication 4, **caractérisé en ce que** l'unité de traitement de signaux (7) est adaptée pour, sur connexion du boîtier de commande (2) au connecteur amont (10), transmettre lesdites données de reprogrammation (31) audit boîtier de commande via le connecteur amont.

6. Dispositif selon l'une des revendications 1 à 5, **caractérisé en ce que** :
- l'antenne (8) est adaptée pour pouvoir émettre des signaux sans fil,
- l'unité de traitement de signaux (7) est adaptée pour pouvoir :
• recevoir, depuis l'appareil (3), des signaux contenant des données, dites données d'état (29), relatives audit appareil ou à son environnement,
• élaborer des signaux, dits signaux d'état (17), à partir desdites données d'état (29),
• émettre sans fil des signaux d'état (17) via l'antenne (8).

7. Dispositif selon l'une des revendications 1 à 6, **caractérisé en ce que** l'unité de traitement de signaux (7) et l'antenne (8) sont adaptées pour émettre et recevoir des signaux sans fil dans un domaine de radiofréquence et selon un protocole conforme à une norme Wi-Fi.

8. Dispositif de nettoyage d'une surface immergée (23) comprenant au moins :
- un appareil (3) nettoyeur de surface immergée comprenant au moins une unité électronique embarquée (27),
- un boîtier de commande (2) :
• adapté pour pouvoir être relié uniquement par une liaison filaire (20) avec l'unité électronique embarquée (27) de l'appareil (3),
• adapté pour pouvoir élaborer et envoyer des signaux de commande (18) à destination de l'unité électronique embarquée (27) de l'appareil (3) via ladite liaison filaire (20),
**caractérisé en ce que** le dispositif de nettoyage comprend un dispositif de modification (1) selon l'une des revendications 1 à 6.

9. Procédé de modification de dispositif de nettoyage de surface immergée (23) dans lequel on choisit un dispositif de nettoyage comprenant :
- un appareil (3) nettoyeur de surface immergée (23) comprenant au moins une unité électronique (27),
- un boîtier de commande (2) :
• relié directement ou indirectement par une liaison avec l'unité électronique (27) de l'appareil (3),
• adapté pour pouvoir élaborer et envoyer des signaux de commande (18) à destination de l'unité électronique (27) de l'appareil (3) via ladite liaison,
**caractérisé en ce qu'**on choisit et on interpose, sur la liaison entre le boîtier de commande (2) et l'appareil (3), un dispositif de modification (1) selon la revendication 1.

## Patentansprüche

1. Vorrichtung zur Modifizierung (1) einer Vorrichtung zum Reinigen einer eingetauchten Fläche (23), umfassend ein selbstfahrendes Reinigungsgerät (3) einer eingetauchten Fläche und einen Steuerkasten (2) des Gerätes, der direkt oder indirekt durch eine Verbindung mit dem Gerät (3) verbunden ist, wobei die Vorrichtung zur Modifizierung (1) ausgeführt ist, um in der Verbindung (20) eingesetzt werden zu können, und umfassend:
- eine Antenne (8), die ausgeführt ist, um drahtlos Signale, die Antragssignale (16) genannt werden, mindestens empfangen zu können,
- eine Signalverarbeitungseinheit (7), die elektrisch mit der Antenne verbunden ist, und ausgeführt, um Folgendes zu können:
• Übertragen von Steuersignalen (18), die von dem Steuerkasten (2) empfangen werden, über die Verbindung zum Gerät (3),
• beim drahtlosen Empfangen von Antragssignalen (16) durch die Antenne (8):
❖ Blockieren des Übertragens der Steuersignale (18), die von dem Steuerkasten empfangen werden,
❖ Ausarbeiten von Steuersignalen des Gerätes, die prioritäre Signale (32) genannt werden,
❖ Übertragen der prioritären Signale (32) zum Gerät (3) über die Verbindung (20) anstelle der Steuersignale.

2. Vorrichtung nach Anspruch 1, **dadurch gekennzeichnet, dass** sie weiter umfasst:
- einen ersten elektrischen Stecker, der stromaufwärtiger Stecker (10) genannt wird, ausgeführt, um elektrisch an den Steuerkasten (2) angesteckt zu werden,
- einen zweiten elektrischen Stecker, der stromabwärtiger Stecker (11) genannt wird, ausgeführt, um elektrisch an das selbstfahrende Reinigungsgerät (3) einer eingetauchten Fläche (23) angesteckt zu werden.

3. Vorrichtung nach Anspruch 2, **dadurch gekennzeichnet, dass** sie weiter mindestens eine Eingangs-/Ausgangsschnittstelle (6a, 6b) umfasst, die zwischen der Signalverarbeitungseinheit (7) und dem stromaufwärtigen und stromabwärtigen Stecker (10, 11) angeordnet ist.

4. Vorrichtung nach einem der Ansprüche 1 bis 3, **dadurch gekennzeichnet, dass** sie weiter mindestens einen Speicher (9) umfasst, der repräsentative logische Anweisungsdaten, die Umprogrammierungsdaten (31) genannt werden, zur Umprogrammierung des Steuerkastens (2) enthält.

5. Vorrichtung nach Anspruch 4, **dadurch gekennzeichnet, dass** die Signalverarbeitungseinheit (7) ausgeführt ist, um beim Anstecken des Steuerkastens (2) an den stromaufwärtigen Stecker (10) die Umprogrammierungsdaten (31) über den stromaufwärtigen Stecker an den Steuerkasten zu übertragen.

6. Vorrichtung nach einem der Ansprüche 1 bis 5, **dadurch gekennzeichnet, dass**:
- die Antenne (8) ausgeführt ist, um drahtlos Signale auszugeben,
- die Signalverarbeitungseinheit (7) ausgeführt ist, um Folgendes zu können:
• Empfangen von dem Gerät (3) von Signalen, die Daten, die Zustandsdaten (29) genannt werden, in Bezug auf das Gerät oder dessen Umfeld enthalten,
• Ausarbeiten von Signalen, die Zustandssignale (17) genannt werden, ausgehend von den Zustandsdaten (29),
• Drahtloses Ausgeben von Zustandssignalen (17) über die Antenne (8).

7. Vorrichtung nach einem der Ansprüche 1 bis 6, **dadurch gekennzeichnet, dass** die Signalverarbeitungseinheit (7) und die Antenne (8) ausgeführt sind, um drahtlos Signale in einem Rundfunkfrequenzbereich und gemäß einem Protokoll entsprechend einer Wifi-Norm auszugeben und zu empfangen.

8. Vorrichtung zum Reinigen einer eingetauchten Fläche (23), mindestens Folgendes umfassend:
- ein Reinigungsgerät (3) einer eingetauchten Fläche, umfassend mindestens eine eingebaute Elektronikeinheit (27),
- einen Steuerkasten (2):
• ausgeführt, um nur durch eine Drahtverbindung (20) mit der eingebauten Elektronikeinheit (27) des Gerätes (3) verbunden zu werden,
• ausgeführt, um Steuersignale (18) ausarbeiten und über die Drahtverbindung (20) an die eingebaute Elektronikeinheit (27) des Gerätes (3) senden zu können,
**dadurch gekennzeichnet, dass** die Reinigungsvorrichtung eine Vorrichtung zur Modifizierung (1) nach einem der Ansprüche 1 bis 6 umfasst.

9. Verfahren zur Modifizierung einer Vorrichtung zum Reinigen einer eingetauchten Fläche (23), wobei man eine Reinigungsvorrichtung auswählt, umfassend:
- ein Reinigungsgerät (3) einer eingetauchten Fläche (23), umfassend mindestens eine Elektronikeinheit (27),
- einen Steuerkasten (2):
• direkt oder indirekt durch eine Verbindung mit der Elektronikeinheit (27) des Gerätes (3) verbunden,
• ausgeführt, um Steuersignale (18) ausarbeiten und über die Verbindung an die Elektronikeinheit (27) des Gerätes (3) senden zu können,
**dadurch gekennzeichnet, dass** man in der Verbindung zwischen dem Steuerkasten (2) und dem Gerät (3) eine Vorrichtung zur Modifizierung (1) nach Anspruch 1 auswählt und einsetzt.

## Claims

1. Device for modifying (1) a device for cleaning a submerged surface (23) comprising a self-propelled submerged surface cleaning appliance (3) and a module for controlling (2) said appliance linked directly or indirectly to said appliance (3) by a link, said modifying device (1) being adapted to be able to be inserted on said link (20) and comprising:
- an antenna (8) adapted to be able to at least receive signals, called request signals (16), wirelessly
- a signal processing unit (7) electrically linked to the antenna, and adapted to be able:
• to transmit control signals (18) received from the control module (2) to the appliance (3) via said link,
• on reception of wireless request signals (16) by the antenna (8):
❖ block the transmission of control signals (18) received from the control module,
❖ generate signals, called priority signals (32), to control the appliance,
❖ transmitting said priority signals (32) to the appliance (3) via said link (20) instead of the control signals.

2. Device according to claim 1, **characterised in that** it further comprises:
- a first electrical connector, called upstream connector (10), adapted to be able to be electrically connected with the control module (2),
- a second electrical connector, called downstream connector (11), adapted to be able to be electrically connected with the self-propelled submerged surface (23) cleaning appliance (3).

3. Device according to claim 2, **characterised in that** it further comprises at least one input/output interface (6a, 6b) arranged between the signal processing unit (7) and the upstream and downstream connectors (10, 11).

4. Device according to one of claims 1 to 3, **characterised in that** it further comprises at least one memory (9) containing logic data, called reprogramming data (31), representative of instructions for reprogramming the control module (2).

5. Device according to claim 4, **characterised in that** the signal processing unit (7) is adapted to, upon connection of the control module (2) to the upstream connector (10), transmit said reprogramming data (31) to said control module via the upstream connector.

6. Device according to one of claims 1 to 5, **characterised in that**:
- the antenna (8) is adapted to be able to transmit wireless signals,
- the signal processing unit (7) is adapted to be able to:
• receive, from the appliance (3), signals containing data, called status data (29), relating to said appliance or to its environment,
• generate signals, called status signals (17), from said status data (29),
• wirelessly transmit status signals (17) via the antenna (8).

7. Device according to one of claims 1 to 6, **characterised in that** the signal processing unit (7) and the antenna (8) are adapted to transmit and receive wireless signals in a radiofrequency domain and according to a protocol conforming to a Wi-Fi standard.

8. Device for cleaning a submerged surface (23) comprising at least:
- a submerged surface cleaning appliance (3) comprising at least one embedded electronic unit (27),
- a control module (2):
• adapted to be able to be linked only by a wired link (20) with the embedded electronic unit (27) of the appliance (3),
• adapted to be able to generate and send control signals (18) to the embedded electronic unit (27) of the appliance (3) via said wired link (20),
**characterised in that** the cleaning device comprises a modifying device (1) according to one of claims 1 to 6.

9. Method for modifying a device for cleaning a submerged surface (23), wherein a cleaning device is selected, comprising:
- an appliance (3) for cleaning a submerged surface (23) comprising at least one electronic unit (27),
- a control module (2):
• linked directly or indirectly by a link with the electronic unit (27) of the appliance (3),
• adapted to be able to generate and send control signals (18) sent to the electronic unit (27) of the appliance (3) via said link,
**characterised in that**, on the link between the control module (2) and the appliance (3), a modifying device (1) according to claim 1 is selected and inserted.
